# EUROPÄISCHE PATENTANMELDUNG

(11) **EP 0 619 069 A1**
(43) Veröffentlichungstag der Anmeldung: **12.10.1994**
(21) Anmeldenummer: 94100650.4
(22) Anmeldetag: 18.01.1994
(51) Int. Cl.: A01K 29/00

(54) **Amphibienleitsystem, Verfahren zum Einbau desselben sowie eine Laufplatte für ein Amphibienleitsystem**

(30) Priorität: 05.04.1993 DE 4311192; 29.04.1993 DE 4314187
(71) Anmelder: ACO Severin Ahlmann GmbH & Co. KG, D-24755 Rendsburg (DE)
(72) Erfinder: Bladt, Wulf, D-24782 Büdelsdorf (DE); Lüneburg, Henning, D-23623 Ahrensbök-Schwochel (DE)
(74) Vertreter: Bohnenberger, Johannes, Dr.

(57) **Zusammenfassung**

Die Erfindung betrifft ein Amphibienleitsystem mit einem Durchlaß (18) zum Unterqueren einer Straße, eines Weges od. dgl., wobei wenigstens eine Laufplatte (24) vorgesehen ist, die an ihren Rändern (38) quer zur Durchlaßrichtung im wesentlichen an Innenseitenwänden des Durchlasses (18) eng anliegt. Unterhalb der Laufplatte (24) ist ein Strömungskanal (20) zum Ableiten von Wasser vorgesehen. Oberhalb der Laufplatte muß eine ausreichende Ganghöhe gegeben sein, so daß die Amphibien den Durchlaß passieren können.

## Beschreibung

Die Erfindung betrifft ein Amphibienleitsystem nach dem Oberbegriff des Anspruchs 1, ein Verfahren zum Einbau desselben sowie eine Laufplatte für ein Amphibienleitsystem.

Eine Vielzahl von Amphibien, insbesondere Kröten, Frösche und Lurche, suchen Gewässer nur zur Paarungs- und Laichzeit auf. Danach wandern sie wieder in die Umgebung ab. Hierbei werden oftmals erhebliche Strecken zurückgelegt.

Aufgrund der Erschließung der Kulturlandschaften durch Straßen und Wege werden die Wanderwege der Amphibien oftmals abgeschnitten. Diese Gefahrenzonen sind den Amphibien nicht bewußt, so daß es zu einer erheblichen, den Artenbestand ernstlich gefährdenden Dezimierung der Tiere kommen kann. Auch die Gefährdung der Straßenbenutzer soll nicht verschwiegen werden.

Um die Tiere einerseits am Überqueren der Straßen zu hindern, andererseits aber dennoch zu den Laichplätzen und zurück gelangen zu lassen, ist es bekannt, unter Straßen Tunnel durchzuführen, die den Tieren das ersehnte Schlupfloch bieten und ein gefahrloses Unterqueren der Straßen und Fahrwege ermöglichen.

Bekannt ist es, als Durchlässe Kastendurchlässe, Betonrohre oder Abdeckhauben zu verwenden, die auf Streifenfundamenten aufgesetzt sind. Derartige Durchlässe bestehen herkömmlicherweise aus Beton, auf dem sich die Amphibien nicht gerne bewegen. Insbesondere weist der herkömmliche Beton eine rauhe Oberfläche auf, die an der Unterseite der Tierkörper reibt, was den Tieren unangenehm ist. Damit besteht die Gefahr, daß die Tiere derartige Durchlässe nicht benutzen.

Weiter ist es auch möglich, daß in die Durchlässe Erdreich eingespült wird, das kontaminiert, beispielsweise mit Tausalz belastet ist, so daß die Gesundheit der Tiere gefährdet sein kann. Schließlich werden zur Entwässerung derartiger Durchlässe auch Wasserrinnen verwendet, in welche die Amphibien fallen können.

Aufgabe der Erfindung ist es, ein eingangs genanntes Amphibienleitsystem dahingehend weiterzubilden, daß eine auf Dauer sichere und "angenehme" Unterquerung von Straßen für die Amphibien gewährleistet ist. Des weiteren ist es Aufgabe der Erfindung, ein Verfahren zum Einbau eines solchen Systems zu schaffen.

Diese Aufgabe wird bei einem Amphibienleitsystem der eingangs genannten Art durch die im kennzeichnenden Teil des Anspruchs 1 beschriebenen Merkmale gelöst. Des weiteren wird die Aufgabe, ein Einbauverfahren zu schaffen, durch die Merkmale des Anspruchs 17 gelöst. Und schließlich wird eine Laufplatte für ein Amphibienleitsystem gemäß den Merkmalen des Anspruchs 22 geschaffen.

Gemäß der Erfindung ist in den Durchlaß des Amphibienleitsystems wenigstens eine Laufplatte eingefügt, die im wesentlichen an den Innenseitenwänden des Durchlasses eng anliegt. Damit wird verhindert, daß die den Durchlaß benutzenden Tiere von der Laufplatte fallen können. Unterhalb der Laufplatte ist ein Strömungskanal vorgesehen, durch den Wasser unter den sich auf der Laufplatte bewegenden Tieren abgeleitet werden kann. Auch die vom Wasser mitgeführte Begleitfrächt, insbesondere Sand oder Geröll, aber auch Tausalz, kann sich im Strömungskanal am Boden des Durchlasses ablagern, wodurch sichergestellt ist, daß die Tiere mit diesen Ablagerungen nicht in Verbindung kommen. Da den Tieren mit der Laufplatte eine ebene und gute Bewegungsfläche geboten ist, wird der Durchgang gerne benutzt und gut angenommen. Zum Reinigen des Strömungskanals kann man die Laufplatte einfach herausnehmen.

Des weiteren wird mit dem erfindungsgemäßen System ein einfacher und kostengünstiger Einbau beispielsweise durch den Einsatz von Fertigteilen gewahrleistet. Darüber hinaus bedarf dieses System auch eines geringen Pflegeaufwandes.

Schließlich können auch Kleintiere, beispielsweise Füchse, Dachse od. dgl., den Durchlaß benutzen.

Vorzugsweise umfaßt die Laufplatte wenigstens eine Stütze, mit der sie sich bei einer Ausführungsform auf einem Bodenelement des Durchlasses oder bei einer anderen Ausführungsform an den Seitenwänden abstützen kann.

Bei der ersten Alternative erstrecken sich die vorzugsweise zwei Stützen, die als Einzelfüße oder Rippen ausgebildet sein können, in Durchlaßrichtung des Durchlasses, wodurch zwischen den Stützen und/oder zwischen den Stützen und den Seitenwänden des Durchlasses Strömungskanäle zum Ablauf des Wassers gebildet sind. Diese Stützweise der Laufplatte ist inbesondere bei Kastenprofil-, Giebelprofildurchlässen od. dgl., also bei Profilen mit vertikalen oder nach innen geneigten Seitenwänden, gut verwendbar.

Die zweite Alternative wird insbesondere bei Röhren oder anderen Durchlässen mit schräg nach außen geneigten Wänden verwendet, so daß sich die Laufplatte mit ihren Seitenrändern an den Innenwänden des Durchlasses abstützt. An der Unterseite der Lauffläche sind vorzugsweise Verstärkungsrippen angeordnet, die eine Durchbiegung der Laufplatte wirkungsvoll verhindern. Vorzugsweise dienen die Stirnflächen der Verstärkungsrippen der Abstützung der Lauffläche an den Seitenwänden des Durchlasses. Damit wird insbesondere eine gute Fixierung der Lauffläche im Durchlaß gewährleistet. Die Laufplatte kann aufgrund der Verstärkungsrippen dünn gehalten werden, ohne statische Nachteile in Kauf nehmen zu nmüssen, so daß eine Gewichtseinsparung, eine Materialeinsparung und eine einfache Handhabung der Laufplatte möglich ist.

Vorzugsweise werden in der Laufplatte Durchlässe angeordnet, die einem Feuchtigkeitsaustausch zwischen dem Strömungskanal und dem Raum oberhalb der Laufplatte dienen. Damit wird für die Amphibien ein angenehmes und günstiges Klima geschaffen, so daß die Tiere das Amphibienleitsystem gut akzeptieren.

Eine besonders kostengünstige Herstellung und ein leichtes Montieren der Laufplatte im Durchlaß ergibt sich bei einstückiger Ausführung der Laufplatte und der Stützen.

Die Lauffläche wird aus Kunstharz, vorzugsweise aus Polymerbeton, gefertigt. Polymerbeton fühlt sich anders als Stein oder Zement-Beton an, so daß die Tiere nicht durch eine "fremdartige", rauhe Oberfläche abgeschreckt werden und auch dadurch das Leitsystem gerne benutzen. Des weiteren besteht bei den herkömmlichen Betonmaterialien die Möglichkeit, daß sich infolge der porösen und rauhen Oberfläche des Materials für die Tiere gesundheitsgefährdende Ablagerungen auf der Betonoberfläche festsetzen, insbesondere Tausalzablagerungen, die die Gesundheit der Tiere gefährden können. Bei der glatten Oberfläche einer aus Polymerbeton gefertigten Lauffläche werden auch geringe Ablagerungen ausgespült, so daß sich die Tiere auf einer unkontaminierten Oberfläche bewegen.

Zum Einleiten der Tiere auf die Lauffläche werden vorzugsweise an beiden Enden des Durchlasses Rampeneinrichtungen angeordnet, die auch eine Wassertrennfunktion besitzen und eine Einleitung des Wassers in den Strömungskanal erlauben.

Vorzugsweise umfaßt die Rampeneinrichtung eine Schüttung, insbesondere eine Kiesschüttung, die sich vom Boden vor dem Durchlaß bis zur Lauffläche der Laufplatte erstreckt und eine besonders einfache und kostengünstige Rampe schafft.

Bei einer weiteren vorteilhaften Ausführungsform ist die Schüttung derart ausgeführt, daß zuerst eine wasserdurchlässige Schicht, vorzugsweise eine Geröllschicht, und dann eine Laufschicht angeordnet ist, wobei die wasserdurchlässige Schicht auf gewachsenem Erdreich und die Laufschicht auf der wasserdurchlässigen Schicht vorgesehen sind. Mit dieser Ausführugnsform wird sichergestellt, daß der Großteil des über den Strömungskanal abfließenden Wassers in diesen bzw. aus diesem gelangen kann. Vorzugsweise wird die Laufschicht aus Kies oder Mutterboden bestehen, der von den Tieren als besonders angenehm empfunden wird.

Um eine Durchmischung der wasserdurchlässigen Schicht und der Laufschicht zu verhindern, wird zwischen beiden Schichten eine Trenneinrichtung, insbesondere ein Vlies, vorzugsweise ein Geovlies vorgesehen.

Alternativ ist auch die Verwendung einer Bohrungen und/oder Schlitze aufweisenden Platte (insbesondere aus Polymerbeton) als Rampe möglich.

Die Laufplatte und ggf. die plattenförmige Rampe können auch leicht außerhalb der Amphibienwanderzeit, insbesondere in Zeiten starken Wasseranfalls, fortgenommen und gelagert werden.

Gemäß dem Verfahren zum Einbau eines Amphibienleitsystems werden ein Durchlaß quer zur Straße unter der Straßenoberfläche eingesetzt, Laufplatten über die Länge des Durchlasses eingefügt und an den Enden des Durchlasses Rampen vorgesehen. Mit diesem Verfahren ist zum einen ein einfacher Einbau eines von Amphibien gerne benutzten Systems gewährleistet, und zum anderen können im wesentlichen alle bereits vorhandenen Straßendurchlässe leicht und ohne großen Aufwand umgerüstet werden, wobei lediglich die Laufplatten in die entsprechenden Durchlässe einzusetzen und an den Enden der Durchlässe Rampen anzuordnen sind.

Bei einer Umrüstung von bereits vorhandenen Durchlässen sind lediglich die Laufplatten und die Rampenelemente hinzuzufügen.

Nachfolgend werden bevorzugte Ausführungsformen der vorliegenden Erfindung mit Bezug auf die beiliegenden Zeichnungen erläutert. Es zeigen:
- Fig. 1: eine Teilquerschnittsansicht eines Amphibienleitsystems mit Durchlaß und Laufplatte,
- Fig. 2: eine Teilquerschnittsansicht wie Fig. 1, wobei die Laufplatte zusätzlich eine Verstärkungsrippe aufweist,
- Fig. 3: eine perspektivische Darstellung einer Laufplatte mit zwei Stütz- bzw. Verstärkungsrippen,
- Fig. 4: eine Vorderansicht einer Laufplatte gemäß Fig. 3,
- Fig. 5: einen vergrößerten Ausschnitt aus Fig. 4 mit Verstärkungsrippe,
- Fig. 6: eine Vorderansicht eines Amphibienleitsystems mit einer Stützrippen aufweisenden Laufplatte in einem Kastenprofildurchlaß,
- Fig. 7: eine Vorderansicht eines weiteren Amphibienleitsystems mit einer Stützrippen umfassenden Lauffläche in einem Halbtonnendurchlaß,
- Fig. 8: eine Vorderansicht eines weiteren Amphibienleitsystems mit Durchlaßrohr, Laufplatte und Laufplattenabstützung und
- Fig. 9: einen Teilseitenschnitt eines Amphibienleitsystems mit einer an einem Ende angeordneten Rampe.

Ein Amphibienleitsystem gemäß der vorliegenden Erfindung umfaßt wenigstens eine Laufplatte 24 mit einer Lauffläche 16 zur Bewegung für Amphibien wie Frösche, Lurche, Kröten od. dgl., die in einem Durchlaß 18, der beispielsweise das Querschnittsprofil eines Rohres, eines Kastens, einer Halbtonne od. dgl. aufweist, vorgesehen ist.

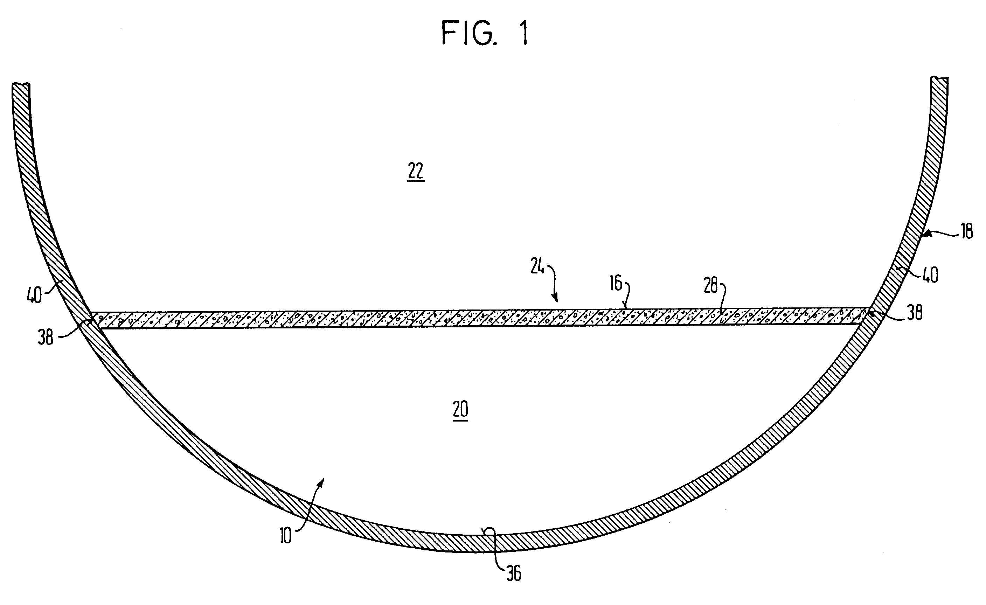

In Fig. 1 ist eine Ausführungsform mit einem Rohr als Durchlaß 18 gezeigt, welches nur zum Teil im Querschnitt dargestellt ist. Die Laufplatte 24 stützt sich mit ihren Seitenrändern 38 entlang von Seitenwänden 40 des Durchlasses 18 derart ab, daß ihre Lauffläche 16 im wesentlichen horizontal ausgerichtet ist. Die Lauffläche 16 ist eben und glatt und wird dadurch von den Amphibien gerne angenommen. Durch das Anliegen der Platte 24 an dem Durchlaß 18 können die Tiere nicht in einen unter der Platte gebildeten Strömungskanal 20 fallen, der zum Ablaufen des Wassers von einer Straßenseite zur anderen vorgesehen ist. Auf dem Boden 36 des Strömungskanals 20 setzen sich Ablagerungen wie Steine, Geröll, Sand, Tausalz od. dgl. ab, mit denen die auf der Lauffläche 16 wandernden Tiere nicht in Kontakt kommen. Da sich Amphibien auf trockenem Untergrund, auf Geröll und Sand nicht gerne bewegen, wird durch diese Trennung sichergestellt, daß die Tiere derartige Durchlässe benutzen. Ferner können Ablagerungen von beispielsweise Tausalz und anderen Schadstoffen die Gesundheit und das Leben der Tiere nicht gefährden.

Beim Einsetzen der Laufplatten 24 muß beachtet werden, daß eine ausreichende Ganghöhe in dem Raum 22 oberhalb der Laufplatte 24 eingehalten wird, so daß sich die Tiere problemlos bewegen können.

Jede Laufplatte 24 kann individuell in einen Durchlaß 18 eingefügt werden. Jedoch ist es auch möglich, die Platte 24 einstückig mit dem Durchlaß 18 auszubilden.

Beim Einfügen mehrerer Laufplatten 24 in einen Durchlaß 18 liegen diese mit ihren Stirnflächen quer zur Durchlaßrichtung aneinander, so daß sich die Lauffläche 16 von einer zur nächsten Laufplatte 24 ohne Unterbrechung und ohne Stufe fortsetzt. Zum Verbinden der Laufplatten 24 miteinander können diese mit (angeformten) Hakeneinrichtungen versehen sein.

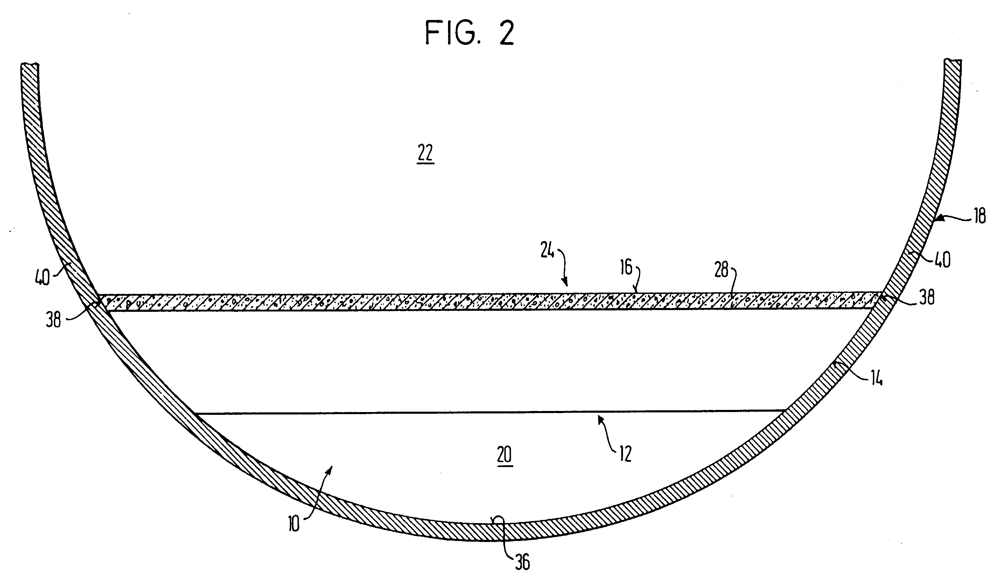

Gemäß einer weiteren Ausführungsform der Erfindung umfaßt die in Fig. 2 dargestellte Laufplatte 24 an der Unterseite angeordnete Verstärkungsrippen 12. Jede Verstärkungsrippe 12 weist an den Stirnseiten zwei komplementär zu den Seitenwänden 40 des Durchlasses 18 geformte Flächen 14 auf, mit denen sie sich abstützt, wodurch ein zusätzlicher und stabiler Halt der Laufplatte 24 im Durchlaß 18 gewährleistet wird. Unterhalb der Verstärkungsrippen 12 ist weiter der Strömungskanal 20 zum Ableiten von Wasser vorhanden.

Gemäß dieser Ausführungsform wird ein Durchbiegen der Laufplatte 24 wirkungsvoll verhindert, so daß diese sehr dünn und damit sehr leicht und montagefreudig ausgebildet werden kann. Solch eine leichte Ausführungsform eignet sich insbesondere auch für einen nachträglichen bzw. reversiblen Einbau der Laufplatte 24 in einem bereits vorhandenen Durchlaß 18 eines Amphibienleitsystems.

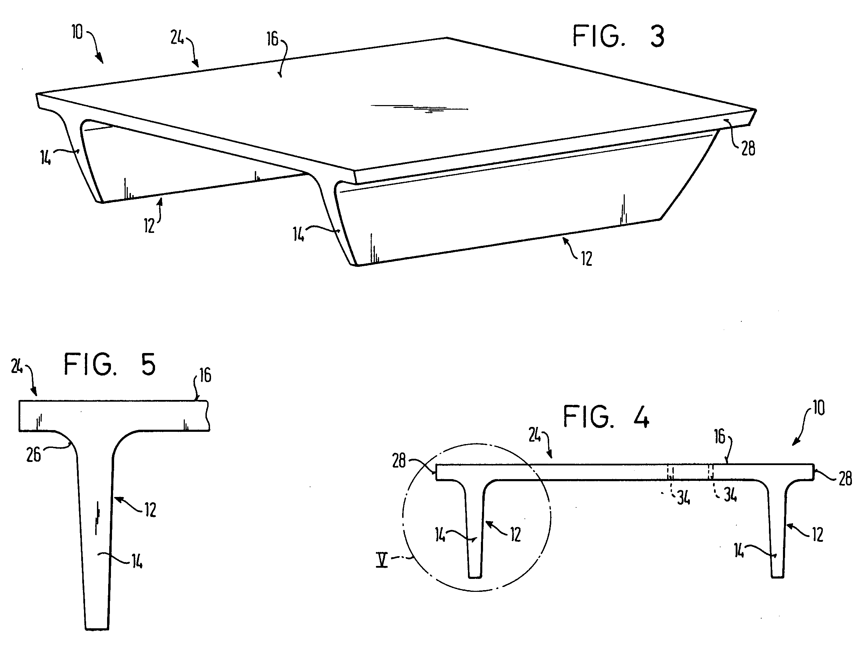

Die Darstellung gemäß Fig. 3 zeigt eine perspektivische Ansicht einer bevorzugten Ausführungsform einer Laufplatte 24, die zwei parallel zueinander, horizontal beabstandete und im Bereich der Seitenränder der Laufplatte 24 angeordnete Stützen bzw. Verstärkungsrippen 12 aufweist, die sich vorzugsweise über die gesamte Breite der Laufplatte 24 erstrecken. Im Querschnitt ergibt sich die in Fig. 2 gezeigte Ausführungsform.

Eine derartig ausgebildete Lauffläche 24 eignet sich sowohl für Durchlässe mit nach außen geneigten Seitenwänden als auch für Kasten- oder Halbtonnendurchlässe, die vertikale oder nach innen geneigte Seitenwände 40 aufweisen.

Bei Durchlässen 18 mit nach außen geneigten Seitenwänden 40 wird die Laufplatte 24 wie vorgenannt beschrieben in den Durchlaß 18 eingesetzt. Dabei verlaufen die Verstärkungsrippen 12 quer zur Durchlaßrichtung und stützen sich mit ihren Stirnflächen an den Seitenwändene 40 ab.

Zur Verbesserung des Feuchtigkeitsaustausches zwischen Strömungskanal 20 und Gangraum 22 ist gemäß Fig. 4 vorzugsweise eine Vielzahl von kleinen Bohrungen 34 in der Laufplatte 24 vorgesehen. Diese Bohrungen 34 gestatten den Austausch von normalerweise im Strömungskanal 22 feuchterer Luft in den Gangraum 22. Damit wird für die Tiere ein besonders angenehmes Klima geschaffen, so daß das Leitsystem in besonderem Maße angenommen wird.

In Fig. 5 ist ein vergrößerter Ausschnitt der Fig. 4 dargestellt. Hierbei sind die Laufplatte 24 und eine Verstärkungsrippe einstückig ausgebildet, und die Verstärkungsrippe schließt mit einer Abrundung 26 an der Lauffläche 24 an. Diese Ausführungsform einer Laufplatte 24 mit Verstärkungsrippe ist besonders einfach und günstig herzustellen.

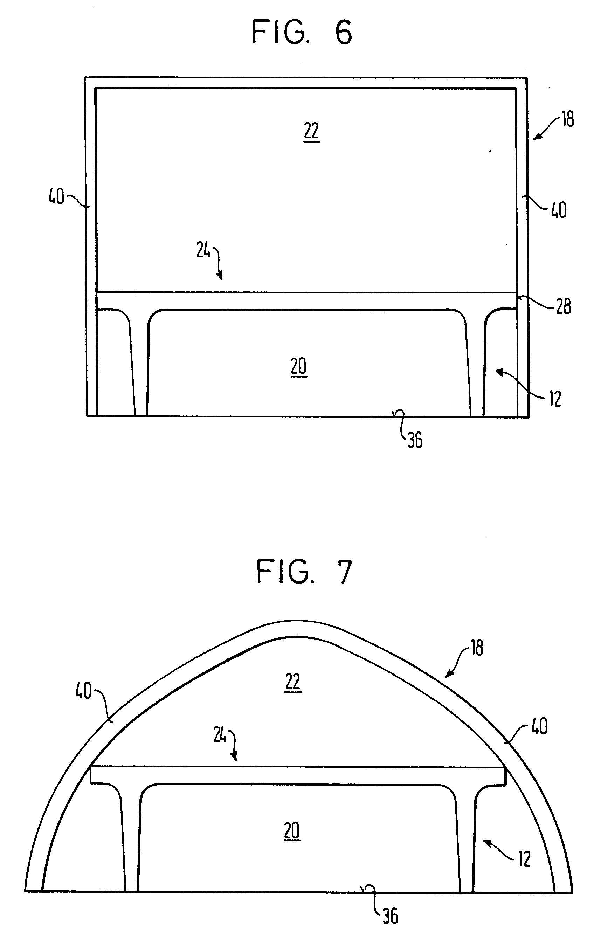

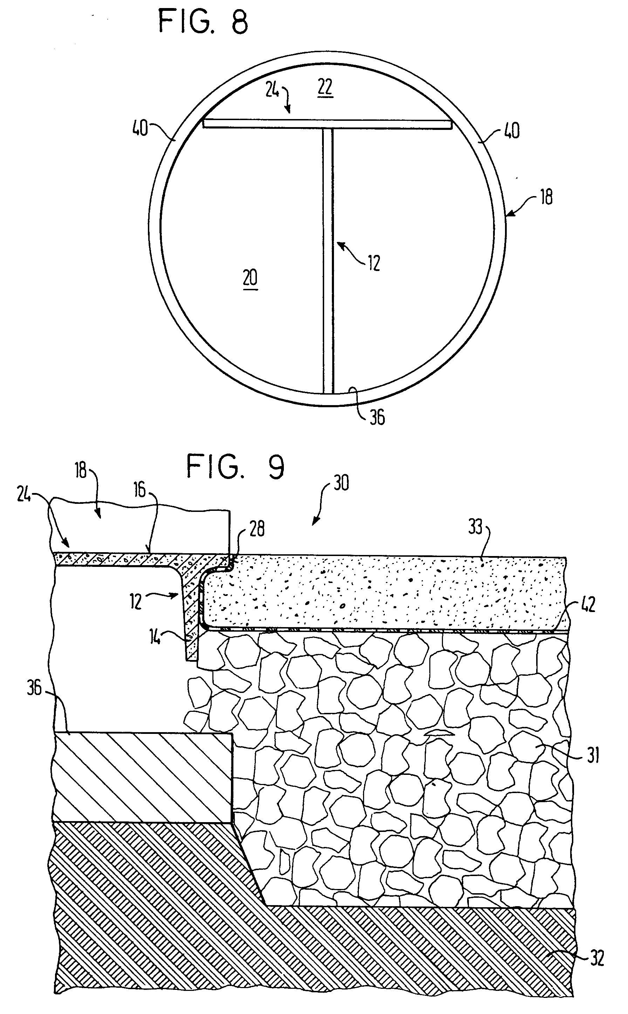

Bei den Ausführungsbeispielen gemäß Fig. 6 und 7 werden die Laufplatten 24 derart in Durchlässe 18 mit Kastenprofil oder Halbtonnenprofil eingesetzt, daß die Seitenränder 28 der Laufplatte 24 ebenfalls an den Durchlaßseitenwänden 40 anliegen. Die nun als Stützen dienenden Verstärkungsrippen 12 stützen die Laufplatte 24 dagegen am Boden 36 des Durchlasses 18 ab und verlaufen in Richtung des Durchlasses, so daß unterhalb der Lauffläche 24 und zwischen den Stützen 12 der Strömungskanal 20 ausgebildet ist. Alternativ können anstatt der sich am Boden 36 abstützenden Rippen auch Einzelfüße vorgesehen sein.

Durch Aneinanderreihung einzelner Laufplatten 24 in Durchlaßrichtung kann der Durchlaß 18 auch bei dieser Ausführungsform auf seiner gesamten Länge mit Laufflächen 24 ausgestattet werden.

In Fig. 8 ist eine Ausführungsform dargestellt, bei der die Lauffläche 24 von einer sich am Boden 36 des Durchlasses 18 abstützenden Stütze 12 und durch Abstützung an den Seitenwänden des Durchlasses 18 in einer Position derart gehalten wird, daß die Strömungskanalfläche 20 wesentlich größer ist als die Durchgangsfläche 22. Diese Ausführungsform kann insbesondere dann verwendet werden, wenn unter der Straße bereits ein Bach od. dgl. mit einem Durchlaß 18 durchgeführt wird und nun zusätzlich ein Amphibienleitsystem installiert werden soll.

Bei der Ausführungsform gemäß Fig. 8 muß darauf geachtet werden, daß Rampen 30 am Ein- und Ausgang des Durchlasses 18 derart angeordnet werden, daß die Tiere nicht in den evtl. darunter fließenden Bach fallen können. So besteht die Möglichkeit, die Laufplatte 24 über den Durchlaß 18 vorstehen zu lassen und die Tiere an den Enden mittels nicht dargestellter Wände seitlich abzuführen.

An den Enden des Durchlasses 18, also am Eingang bzw. Ausgang, wird vorzugsweise eine Rampe (30) angeordnet, die eine Trennungsfunktion übernimmt und zum einen die Amphibien auf die Lauffläche 16 der Laufplatte 24 führt und zum anderen das Wasser in den bzw. aus dem Strömungskanal 20 leitet. Ein Ausführungsbeispiel einer solchen Rampe ist in Fig. 9 dargestellt, wobei auf dem gewachsenen Erdreich 32 eine gut wasserdurchlässige Geröllschicht 31 und anschließend bis auf die Höhe der Lauffläche 16 eine Laufschicht 33 vorgesehen sind. Als Laufschicht 33 eignet sich insbesondere Kies- oder Mutterboden, auf welchem sich die Amphibien gerne bewegen.

Zwischen der Geröllschicht 31 und der Laufschicht 33 ist ein Geovlies 42 vorgesehen, das eine Vermischung der Schichten 31 und 33 verhindert. Das Geovlies 42 ist bis an die Laufplatte herangeführt und verläuft entlang dieser bis zur Lauffläche 16 der Laufplatte 24, so daß der bei diesem Ausführungsbeispiel verwendete Kies- oder Muterboden der Laufschicht 33 nicht in den Strömungskanal 20 eindringen kann.

Die Amphibien können sich über die Rampe 30 in den bzw. aus dem Durchlaß 18 bewegen. Über die Zwischenräume in der wasserdurchlässigen Schicht 31 kann das Wasser in den bzw. aus dem Strömungskanal 20 abfließen, so daß eine Trennung Amphibie - Wasser leicht möglich ist.

Alternativ können auch andere Rampen verwendet werden. Beispielsweise kann eine mit Löchern oder Schlitzen versehene Platte, durch die das Tier auf die Lauffläche 16, das Wasser jedoch in den Strömungskanal 20 geleitet wird, die Laufschicht 33 ersetzen. Bei einer derartigen Ausführungsform kann dann ggf. die wasserdurchlässige Schicht 31 entfallen.

Besonders vorteilhaft wirkt sich ferner aus, wenn zumindest die Laufplatte 24 aus Polymerbeton gefertigt ist, da die Tiere die glatte Oberfläche gerne annehmen und ohne zu zögern benutzen.

Das o.g. Amphibienleitsystem kann auf einfache Weise neu aufgestellt oder auch bei bereits vorhandenen Durchlässen nachträglich vervollständigt werden.

Beim Verlegen eines derartigen Systems wird der Durchlaß 18 auf herkömmliche Weise quer zur Straße und unterhalb der Straßenoberfläche angeordnet.

Anschließend werden die Laufplatten 24 je nach Profil des Durchlasses 18 in diesen eingesetzt, so daß sie aneinanderstoßen und eine ebene Gesamtlauffläche bilden. Dabei wird durch die Aneinanderreihung einzelner Laufplatten 24 der

Durchlaß 18 auf seiner gesamten Durchlaßlänge mit derartigen Platten ausgestattet. An den Enden des Durchlasses 18 wird dann eine Amphibien und Wasser trennende Rampe 30 angeordnet, wobei bei einer einfachen Ausführungsform lediglich eine Kiesschicht bis zur Lauffläche 16 der Laufplatte 24 aufgefüllt wird.

Bei der bevorzugten Ausführungsform gemäß Fig. 9 wird alternativ auf das gewachsene Erdreich 32 eine Geröllschicht 31 aufgebracht. Nachfolgend wird das Vlies 42, insbesondere ein Geovlies, in der in Fig. 9 dargestellten Weise auf die Geröllschicht 31 aufgebracht. Auf das Vlies 42 wird dann eine Mutterbodenschicht bis zur Höhe der Lauffläche 16 aufgefüllt, wobei die Oberfläche der Mutterbodenauffüllung 33 sowie die Lauffläche 16 bündig abschließen.

Verwendet man als Rampe 30 eine mit Löchern oder mit Schlitzen versehene Platte, so wird diese vorzugsweise ebenfalls aus Polymerbeton hergestellt.

Mit der vorliegenden Erfindung und gemäß diesen Ausführungsformen wird somit ein Amphibienleitsystem geschaffen, welches von Amphibien gerne benutzt und gut angenommen wird, das eine Gefährdung der Tiere durch Schadstoffe, insbesondere Tausalz ausschließt und bei dem eine Entwässerung wirkungsvoll möglich ist, ohne daß die Tiere in den Abwasserstrom gelangen können.

## Patentansprüche

1. Amphibienleitsystem umfassend einen Durchlaß (18) zum Unterqueren einer Straße, eines Weges od. dgl.,
**gekennzeichnet durch**
wenigstens eine Laufplatte (24), die an ihren Rändern (38) quer zur Durchlaßrichtung im wesentlichen an Seitenwänden (40) des Durchlasses (18) eng anliegt und derart ausgebildet ist, daß unter der Laufplatte (24) ein in Durchlaßrichtung im wesentlichen freier Strömungskanal (20) zum Ableiten von Wasser und über der Laufplatte (24) eine ausreichende Ganghöhe vorgesehen sind, die das Passieren von Amphibien gestattet.

2. Amphibienleitsystem nach Anspruch 1,
**dadurch gekennzeichnet**,
daß die Laufplatte (24) wenigstens eine Stütze (12) zur Abstützung aufweist.

3. Amphibienleitsystem nach Anspruch 2,
**dadurch gekennzeichnet**,
daß sich mindestens eine Stütze (12) auf einem Bodenteil (36) des Durchlasses (18) abstützt.

4. Amphibienleitsystem nach Anspruch 3
**dadurch gekennzeichnet**,
daß die Laufplatte (24) mehrere, vorzugsweise zwei Stützen (12) aufweist, die als Einzelfüße oder Rippen ausgebildet sind, welche im wesentlichen in Durchlaßrichtung verlaufen.

5. Amphibienleitsystem nach Anspruch 4,
**dadurch gekennzeichnet**,
daß die Einzelfüße oder Rippen im wesentlichen über die gesamte Länge der Laufplatte (24) verlaufen.

6. Amphibienleitsystem nach einem der Ansprüche 1 bis 5,
**dadurch gekennzeichnet**,
daß sich die Laufplatte (24) mit Seitenrändern (38) und/oder Stützen (12) an der Seitenwand (40) des Durchlasses (18) abstützt.

7. Amphibienleitsystem nach Anspruch 6,
**dadurch gekennzeichnet**,
daß die Laufplatte (24) mindestens eine, vorzugsweise zwei Verstärkungsrippen (12) an ihrer Unterseite umfaßt, die sich im wesentlichen über die gesamte Breite der Lauffläche erstreckt (erstrecken) und quer zur Durchlaßrichtung verläuft (verlaufen), wobei sich ihre Stirnflächen (14) vorzugsweise an den Durchlaßseitenwänden (40) abstützen.

8. Amphibienleitsystem nach einem der vorhergehenden Ansprüche,
**dadurch gekennzeichnet**,
daß die Laufplatte (24) zum Feuchtigkeitsaustausch Durchlässe (34) aufweist.

9. Amphibienleitsystem nach einem der vorhergehenden Ansprüche,
**dadurch gekennzeichnet**,
daß die Laufplatte (24) und die Stütze(n) (12) einstückig ausgebildet sind.

10. Amphibienleitsystem nach einem der vorhergehenden Ansprüche,
**dadurch gekennzeichnet**,
daß die Laufplatte (24) und/oder Stützen aus Polymerbeton bestehen.

11. Amphibienleitsystem nach einem der vorhergehenden Ansprüche,
**dadurch gekennzeichnet**,
daß Rampen-Einrichtungen (30) vorgesehen und derart angeordnet sind, daß die Amphibien auf eine Lauffläche (16) der Laufplatte (24) führbar sind und Wasser in den Strömungskanal (20) leitbar ist.

12. Amphibienleitsystem nach Anspruch 11,
**dadurch gekennzeichnet**,
daß als Rampen-Einrichtung (30) eine Bohrungen und/oder Schlitze aufweisende Platte vorgesehen ist, die vorzugsweise aus Polymerbeton besteht.

13. Amphibienleitsystem nach Anspruch 11,
**dadurch gekennzeichnet**,
daß die Rampen-Einrichtung (30) eine Schüttung (31, 33), insbesondere Kiesschüttung, umfaßt.

14. Amphibienleitsystem nach Anspruch 13,
**dadurch gekennzeichnet,**
daß die Rampen-Einrichtung (30) eine wasserdurchlässige Schicht (31), vorzugsweise eine Geröllschicht, und eine Laufschicht (33) umfaßt, wobei die wasserdurchlässige Schicht (31) auf gewachsenem Erdreich (32) und die Laufschicht (33) auf der wasserdurchlässigen Schicht (31) derart vorgesehen sind, daß die Laufschicht (33) mit der Lauffläche (16) der Laufplatte (24) im wesentlichen bündig abschließt.

15. Amphibienleitsystem nach Anspruch 14,
**dadurch gekennzeichnet,**
daß die Laufschicht (33) aus Kies- oder Mutterboden besteht.

16. Amphibienleitsystem nach einem der Ansprüche 14 oder 15,
**dadurch gekennzeichnet**,
daß zwischen der Laufschicht (33) und der wasserdurchlässigen Schicht (31) eine Trenneinrichtung, insbesondere ein Vlies (42), vorzugsweise ein Geovlies, derart angeordnet ist, daß eine Vermischung der Schichten (31, 33) verhindert wird.

17. Verfahren zum Einbau eines Amphibienleitsystems nach einem der Ansprüche 11 bis 16,
**gekennzeichnet durch die Schritte,**
daß ein Durchlaß (18) quer zu einer Straße, zu einem Weg od. dgl. unter der Straßenoberfläche eingesetzt wird, daß Laufplatten (24) über die ganze Länge des Durchlasses (18) in diesen eingesetzt werden,
daß axial außerhalb des Durchlasses (18) im wesentlichen bis auf Höhe eines Durchlaßbodenteils (36) ein teilweise wasserdurchlässiges Material aufgefüllt wird und
daß darauffolgend zur Drainage eines Strömungskanals (20) bis auf die Höhe einer Lauffläche (16) der Laufplatte (24) Rampen-Einrichtungen (30) vorgesehen werden.

18. Verfahren nach Anspruch 17,
**dadurch gekennzeichnet,**
daß als Rampen-Einrichtung (30) axial außerhalb des Durchlasses (18) zur Drainage des Strömungskanals (20) mit einem wasserdurchlässigen Material, insbesondere einer Geröllschicht (31) aufgefüllt wird und darauffolgend bis auf die Höhe der Lauffläche (16) eine Laufschicht (33) vorgesehen wird.

19. Verfahren nach Anspruch 18,
**dadurch gekennzeichnet**,
daß vor dem Anordnen der Laufschicht (33) eine Trenneinrichtung, insbesondere ein Vlies (42), vorzugsweise ein Geovlies auf dem wasserdurchlässigen Material (31) aufgetragen wird.

20. Verfahren nach einem der Ansprüche 18 oder 19,
**dadurch gekennzeichnet,** daß als Laufschicht (33) Kies- oder Mutterboden verwendet wird.

21. Verfahren nach Anspruch 17,
**dadurch gekennzeichnet**,
daß eine Bohrungen und/oder Schlitze aufweisende Platte, die vorzugsweise aus Polymerbeton besteht, als Rampen-Einrichtung (30) angeordnet wird.

22. Laufplatte für ein Amphibienleitsystem zum Einsetzen in einen Durchlaß (18), der eine Straße, einen Weg od. dgl. unterquert, wobei die Laufplatte (24) an ihren Rändern (38) quer zur Durchlaßrichtung im wesentlichen an Seitenwänden (40) des Durchlasses (18) eng anliegt und derart ausgebildet ist, daß unter der Laufplatte (24) ein in Durchlaßrichtung im wesentlichen freier Strömungskanal (20) zum Ableiten von Wasser und über der Laufplatte (24) eine ausreichende Ganghöhe vorgesehen sind, die das Passieren von Amphibien gestattet.
